(19) Europäisches Patentamt
European Patent Office
Office européen des brevets

(11) **EP 4 098 542 A1**

(12) **EUROPEAN PATENT APPLICATION**

(43) Date of publication:
**07.12.2022 Bulletin 2022/49**

(21) Application number: **21177378.3**

(22) Date of filing: **02.06.2021**

(51) International Patent Classification (IPC):
**B63B 39/00** (2006.01)     **B63B 79/15** (2020.01)
**B63B 79/20** (2020.01)

(52) Cooperative Patent Classification (CPC):
**B63B 79/10; B63B 79/15; B63B 79/30;**
**F03D 17/00;** B63B 2035/446; F03D 13/25;
F05B 2240/93; F05B 2260/821; F05B 2270/342

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens Gamesa Renewable Energy**
**A/S**
**7330 Brande (DK)**

(72) Inventor: **Laugesen, Kasper**
**6700 Esbjerg (DK)**

(74) Representative: **SGRE-Association**
**Siemens Gamesa Renewable**
**Energy GmbH & Co KG**
**Schlierseestraße 28**
**81539 München (DE)**

(54) **ESTIMATING A SEA STATE OF AN OFFSHORE WIND TURBINE**

(57)     It is provided a method of estimating a sea state, in particular wave spectrum (60), a offshore wind turbine (1) has been subjected to, the method comprising: measuring a response quantity (16) responding to the sea state, using at least one sensor (8,9,10,11) associated with the offshore wind turbine (1); processing the response quantity (16) to derive a measured response spectrum (18); deriving a calculated response spectrum (21) based on a previously estimated wave spectrum (19); deriving an error (22) between the measured response spectrum (18) and the calculated response spectrum (21); adjusting the previously estimated wave spectrum (19) based on the error, in order to derive an adjusted estimated wave spectrum (60).

FIG 2

EP 4 098 542 A1

**Description**

Field of invention

The present invention relates to a method and a corresponding arrangement of estimating a sea state to which a, in particular floating, offshore wind turbine is or has been subjected to. Furthermore, the present invention relates to a, in particular floating, offshore wind turbine system including the arrangement.

Art Background

A floating wind turbine (FWT) system includes a floating substructure that floats above the sea floor, connects to the tower on which a turbine is located, and a station keeping system capable of limiting the excursion and/or accelerations of the FWT within prescribed limits and maintaining the intended orientation. The station keeping system may comprise of a mooring system that typically comprises mooring lines and anchors and which connects the floating substructure to the seabed. In other cases the station keeping system might comprise of e.g. active thrusters.

The terms FWT (Floating Wind Turbine) and FOWT (Floating Offshore Wind Turbine) are used as synonyms in this application.

FWTs are complex systems with multiple variables and multiple degree of freedoms (DOFs). Wind, wave, and current loadings, which are irregular by nature, as well as aerodynamical, structural, and hydrodynamical couplings, as well as control actuations, all contribute to a highly complex dynamical behavior. Looking at the global system the floater motion can be divided into six individual degrees of freedom (DOF) namely three translations; surge, sway and heave, and three rotations; floater roll, floater pitch, and floater yaw. Embodiments of the present invention take these DOF into account.

Due to similarities in naming between the pitch of the blades and the pitch of the floater a clear distinction is in this text made by dividing it into floater pitch and blade pitch. That is floater pitch is the rotation of the floating structure around its point of rotation, while blade pitch defines the controlled pitching of the blades. Likewise, floater yaw defines the rotation of the floating structure around its vertical axis (z), while turbine yaw is the rotation of the nacelle.

The design process of a FWT is among others based on site specific data e.g. wind, current and wave properties along the occurring wind-current-wave misalignment. This data is traditionally based on hindcast data combined with extrapolated data to achieve extreme event predictions.

Conventionally, fatigue load evaluation is based on thousands of simulations based on the hind cast data. It is however practically impossible to represent the multiple different possible combinations of the sea state, therefore the multiple different sea states in the hind cast data is traditionally replaced by a few representatives. This lumping can be done in several ways, e.g. occurrence-based lumping, which however not necessarily is fatigue damage equivalent. Another way is also to lump the data to represent a more fatigue damage equivalent design. In both cases the end results are binned values of wind, wave and current parameter values along with their misalignments and the occurrence probabilities of the specific event.

Conventionally, assumptions in the modelling and design basis might lead to deviations between the design and the reality. Most often the design is overly designed due to conservatism in the design process.

Wave forces are one of the main contributors to fatigue damage and as the wave forces are directly correlated on the local wave conditions, it is crucial to be able to project local wave conditions over the lifetime of the wind turbine to calculate the fatigue damage accumulation.

A way of increasing the accuracy in the estimation of fatigue loads of a FWT in a post design is to understand the environmental conditions at site which the FWT has actually been exposed to which yet again can be used to predict/extrapolate the cumulated damage over the full lifetime, this in order to assess the fatigue load utilization ratio.

This information can e.g. be used to life time extend the operation of the FWT, it can be used as a decision tool to determine whether some upgrades can be installed on the turbines (e.g. power boost, power curve upgrades etc.), it can be used to assess whether some turbine control and wind farm control strategies can be used.. Furthermore, it can provide vital information to understand whether a design is overly conservative and give insight into how such design in the future can be made less conservative. Additional it can give insight into what external conditions was present when special events e.g. alarms are triggered on the turbine

Sea State Estimation (SSE) has traditionally been done by wave rider buoys which are floating measurement devices capable of recording different types of relevant data which can be used to estimate the sea state in the given area. Other options are attaching wave radars to the foundation which utilizes the radar signals to estimate the different wave parameters. The cost of wave rider buoys or wave radars is significant, and wave buoys are in general not placed in close vicinity of the specific FWT.

Conventional methods to estimate a sea state do not in all circumstances provide sufficient accuracy. In particular, it has been observed that conventional methods do not provide in all circumstances accurate fatigue load estimations of wind turbine components. Furthermore, it has been observed that it is often difficult to keep track of wave conditions and changing wave states during operation of an offshore wind turbine.

Thus, there may be a need for a method and a corresponding arrangement of estimating a sea state a, in particular floating, offshore wind turbine has been subjected to wherein accuracy of the estimated sea state is improved, wherein the sea state can be monitored continuously and accurately, in particular in order to estimate the fatigue load or in general the load the, in particular floating, offshore wind turbine has been or is subjected to.

Summary of the Invention

This need may be met by the subject matter according to the independent claims. Advantageous embodiments of the present invention are described by the dependent claims.

According to an embodiment of the present invention it is provided a method of estimating a sea state, in particular wave spectrum, a, in particular floating, offshore wind turbine has been subjected to, the method comprising: measuring a response quantity responding to the sea state, using at least one sensor associated with the offshore wind turbine; processing the response quantity to derive a measured response spectrum; deriving a calculated response spectrum based on a previously estimated wave spectrum; deriving an error between the measured response spectrum and the calculated response spectrum; adjusting the previously estimated wave spectrum based on the error, in order to derive an adjusted estimated wave spectrum.

The method may be implemented in software and/or hardware. The method may for example be performed by a wind turbine controller or a control or processing module of the wind turbine.

Embodiments of the present invention may be applied to a floating offshore wind turbine and/or a bottom fixed, in particular offshore, wind turbine.

The sea state may for example be characterized by a wave spectrum, i.e. a spectrum of sea waves. Each sea wave portion in the spectrum may have a frequency and a direction and the wave spectrum may be represented as plural intensity or amplitude values depending on the wave direction and wave frequency. The floating offshore wind turbine may be a conventional floating offshore wind turbine.

The sensor or plural sensors may be configured to measure for example an acceleration and/or a strain and/or an inclination or orientation of the wind turbine for example. The sensor may for example be mounted at a wind turbine component, such as the wind turbine tower, the nacelle, a rotor blade, a rotor blade root. The method may not require to obtain any data from conventional measurement buoys floating on the sea.

The response quantity may for example indicate an acceleration in one or more directions, a strain in one or more directions, an inclination, or position coordinates. The response quantity may also comprise temporal changes of the aforementioned measurement parameters.

The processing may involve to extract different frequency components from the response quantity, in particular involving a Fourier transformation. The measured response spectrum may for example indicate intensity or amplitude of one or plural response quantity components being characterized for example by frequency and/or direction, for example direction of strain, direction of acceleration, etc.

The previously estimated wave spectrum may for example in the very beginning be an initial wave spectrum which may be defined to initiate the method. The method may continuously be applied during operation of the wind turbine, in particular while the wind turbine produces electrical energy. The initial wave spectrum or the previously estimated wave spectrum may also comprise for each of plural frequencies and/or directions of waves a corresponding intensity or amplitude. Thereby, conventional algorithms may be supported.

In order to derive the error, for example a difference between the measured response spectrum and the calculated response spectrum may be derived. The difference may for example involve a different intensity or amplitude for each of plural frequencies and/or directions of response spectrum portions. The error may be characterized regarding its absolute value which is aimed to be reduced during performing the method.

The previously estimated wave spectrum may for example be adjusted using a gradient method which may ensure that the error will decrease from cycle to cycle or iteration to iteration. In other embodiments, adjusting the estimated wave spectrum may involve a trial and error algorithm.

When a sensor associated with the (floating) offshore wind turbine is utilized to obtain the response quantity, the sea state may be estimated in an improved manner, in particular in order to estimate the fatigue load the wind turbine is subjected to or has been subjected to. This may be, because the sensor is associated with the wind turbine itself, thus, senses the wave motions which directly impact on the wind turbine, compared with a rider buoy which may for example be located or arranged spaced apart from the wind turbine.

The offshore wind turbine may be a floating wind turbine (FWT) system including a floating substructure that floats above the sea floor and connects to the tower on which a turbine is located, and a station keeping system. The station keeping system may comprise of a mooring system that may comprise mooring lines and anchors and which connects the floating substructure to the seabed. In other cases the station keeping system might comprise of e.g. active thrusters.

According to an embodiment of the present invention a way of estimating the actual sea state that the FWT has been exposed to given a given time period e.g. 3-6 hours, which is then stored is provided.

According to an embodiment of the present invention the directional wave spectrum from measured FWT response data is estimated, which is easily accessible and already at hand through the turbine monitoring system, that is a FWT with an appropriate measurement system could be used as a wave buoy.

It shall be noted that the response of a FWT is more complicated than a simple wave buoy, however with the right information/theoretical knowledge about the FWT this additional complexity can be accounted for. Even though the response of the FWT might be more complicated, it shall be noted that it is also simpler than e.g. estimation based on a ship having a constant forward speed. The reason is that with a constant forward speed the Doppler effect will needed to be accounted for. The Doppler effect is challenging because in a following sea (sea that is similar in heading to the ship) a single encounter frequency can be mapped into 3 different absolute frequencies and to detect the actual one is a complicated procedure.

According to an embodiment of the present invention, the method further comprises iteratively adjusting the estimated wave spectrum, until the error satisfies a convergence criterium, in particular is below a threshold.

In each iteration, the previously adjusted estimated wave spectrum may be adjusted in order to obtain a new adjusted estimated wave spectrum from which a new calculated response spectrum may be obtained which may be closer to the measured response spectrum than the previous calculated response spectrum. Thus, the newly adjusted estimated wave spectrum will even to a closer extent reflect the true sea state, in particular the true wave spectrum the wind turbine is actually subjected to or has been subjected to.

The convergence criterion may involve the definition of one or more thresholds, for example thresholds for different frequencies of the waves and/or different directions of the waves. In other embodiments, the error may be assessed in respect to its absolute value which may be calculated for example as an appropriate sum of differences between the measured response quantity and the calculated response quantity for all or different frequencies and/or directions. Thereby, the accuracy of the final estimated wave spectrum may be improved.

According to an embodiment of the present invention, the sensor is mounted on or at or within the floating offshore wind turbine and/or on or at or within a floating platform and/or on or at or within a vessel carrying the wind turbine.

According to embodiments of the present invention, more than one sensor may be utilized to provide the response quantity or provide plural response quantities. In particular, plural response quantities may be measured by plural sensors and from the plural response quantity measurement results, plural measured response spectra or a combined measured response spectrum may be derived, for example by appropriately weighting the different response quantities and deriving respective frequency components. For example, different sensors may be more or less sensitive to different frequency ranges or direction ranges. Thereby, utilizing measurement results from plural sensors may improve the estimation of the sea state.

According to an embodiment of the present invention, the sensor includes at least one of an acceleration sensor; a blade root strain/load sensor; an inclination sensor; a gyroscope; a strain gauge sensor, in particular mounted along the tower; a GPS tracking device. Thereby, conventionally available sensors at or on or within the wind turbine may be supported in order to perform the method. Thus, no additional sensors may be necessary, simplifying the method and simplifying the complexity of the wind turbine.

According to an embodiment of the present invention, the adjusted estimated wave spectrum specifies power and/or amplitude of plural wave portions depending on a frequency of the wave portion and/or direction of the wave portion.

The direction of the wave portion may for example be specified as a radial angle or azimuthal angle ranging from 0 to 360° specifying a cardinal direction for example. The frequencies may be selected from one or more frequency ranges, such as frequency ranges of typical sea waves. When the adjusted estimated wave spectrum is given in the form as specified above, the fatigue load the wind turbine is subjected to or has been subjected to may be derived in a conventional manner.

According to an embodiment of the present invention, deriving the calculated response spectrum based on the previously estimated wave spectrum involves applying a linear transfer function and/or a response amplitude operator to the previously estimated wave spectrum.

Applying the linear transfer function and/or the response amplitude operator to the previously estimated wave spectrum may involve performing an integration over frequencies and directions. The transfer function and/or the response amplitude operator may have been calculated from theoretical considerations and/or simulations and/or training data. Thereby, modelling the movements of the offshore wind turbine in response to one or more reference wave spectrums may be derived or may have been derived. A linear transfer function may indicate that a change in a wave spectrum may in a linear manner affect the calculated response spectrum. Thereby, the method may be simplified.

According to an embodiment of the present invention, the transfer function and/or Response Amplitude Operator implicitly describes how the surface elevation of the sea state characterized by the respective wave spectrum is transferred into vessel motion and/or wind turbine motion, wherein it is in particular assumed that the sea state and the associated responses represent an ergodic, homogenous random process. Thereby, conventional transfer functions or response amplitude operators are supported.

According to an embodiment of the present invention, the method applies a frequency domain approach, wherein the measured and the estimated wave spectrum and/or the response quantity and/or the error is given or derived in the frequency domain.

In the frequency domain approach, all considered quantities (measured or calculated) may be given or represented in the frequency domain, such that for example intensity or amplitude of a measured or calculated quantity is given for any frequency in a considered frequency range and/or direction. In the frequency domain approach, advantageously, the response of the offshore wind turbine may be calculated in a simplified manner. For example, it may be assumed that frequency components independently from each other may influence the motion of the wind turbine. Thus, the motion excited due to a particular frequency component, may in a linear manner be combined with a motion of the wind turbine as excited by another frequency component. Advantageously, a superposition methodology may be applied. Thereby, calculations may be simplified, assuming in dependency of effects of different frequency components on the motion of the wind turbine. According to an embodiment of the present invention, the estimated wave spectrum is modelled according to a non-parametric approach, wherein the adjusted estimated wave spectrum is represented as set of energy states discretized having different frequencies and directions.

A non-parametric approach may have the advantage that no restriction or only small restriction is forced on the shape or structure of the wave spectrum impacting on the (floating) offshore wind turbine.

According to an embodiment of the present invention, the non-parametric approach applies Bayesian statistic which introduces the use of prior information of the wave spectrum including a hyperparameter controlling the smoothness and agreement to data, combined with a likelihood of some given parameters given some data, to model a posterior distribution.

The *a priori* knowledge may restrict the solution space of the desired final estimated wave spectrum. The priori knowledge may involve the knowledge that the amplitude or power or intensity of wave portions having a frequency for example larger or smaller than one or more thresholds may be zero or close to zero. Furthermore, due to the physical nature of the water or seawater, or the depth of the sea, the sea state or wave spectrum may have a particular profile, e.g. that the spectrum should approach a smooth and continuous function over the span of the frequencies and propagation angles. Those kinds of properties may be included in *a prior* knowledge by implying a prior distribution of the wave spectrum.

The hyperparameter spans the area of which possible solutions can be found, which depending on the value of the hyperparameter is a combination of the agreement to the data and smoothness of the final wave spectrum. It shall be noted that the best agreement to data is most likely achieved independent of the smoothness, likewise smoothest profile is most likely achieved independent of the agreement to the data. The inclusion of the hyperparameter then in general may lead to the problem of choosing the optimal value of the hyperparameter leading to the most optimal solution considering both the agreement in smoothness and agreement with data.

According to an embodiment of the present invention, the estimated wave spectrum is modelled according to a parametric approach, wherein the estimated wave spectrum is represented by definition of one or more wave parameters of one or more predetermined wave spectra, wherein the adjusted estimated wave spectrum is represented by optimized wave parameters.

The parametric approach may have the advantage, that only wave parameters need to be determined which may simplify the method. The predetermined wave spectra may for example involve or comprise a number of (basic or reference) wave spectra, conveniently or appropriately describing the sea state of the particular location or the environmental conditions for example as has been found previously.

According to an embodiment of the present invention, the wave parameters include at least one of wave height, peak period, mean propagation angle, wave spreading parameter.

Thereby, conventionally applied wave parameters are supported. The wave height may correspond or may reflect the amplitude or the intensity or power of a wave portion. The peak period may for example be related to the frequency of the wave portion, such as being the inverse of the frequency. The propagation angle may reflect the direction of the wave. The wave spreading parameter may define the degree of directional spreading in directional wave spectrum, that is how the energy is spread across different propagation angles.

According to an embodiment of the present invention, the method applies the following equation:

$$\boldsymbol{b} \;=\; \boldsymbol{A}\boldsymbol{f}\,(\boldsymbol{x}) \;+\; \boldsymbol{w}$$

wherein
Af is the estimated response spectrum,
b is the measured response spectrum,

A is the system matrix transfer function,
f is the estimated wave spectrum,
x represents wave parameter values,
w is measurement noise.

According to an embodiment of the present invention the method further comprises at least one of: continuously monitoring/logging the sea state; estimating fatigue damage of at least one component of the wind turbine; providing an alert regarding maintenance and/or redesign and/or upgrade and/or replacement and/or repair of at least one component of the wind turbine and/or regarding shut down and/or curtailment.

Thereby, a simple linear equation is provided to calculate the measured response spectrum, thereby simplifying the method.

When the sea state is continuously monitored involving estimating the sea state and storing the sea state, the environmental influences which the wind turbine is subjected to, may be appropriately considered for estimating the fatigue load the wind turbine is subjected to or has been subjected to. Thus, for one or more components of the wind turbine, the method may further comprise to estimate the fatigue damage of one or more components of the wind turbine, based on the derived adjusted estimated wave spectrum. For example, when the fatigue damage is estimated to be above a threshold (for example component specific threshold), an alert may be given regarding the above listed actions or recommendations. Thereby, reliable operation of the wind turbine may be ensured.

It should be understood, that features, individually or in any combination, disclosed, applied, explained or provided for a method of estimating a sea state of a floating offshore wind turbine, may also, individually or in any combination, be provided for an arrangement for estimating a sea state, according to embodiments of the present invention and vice versa.

According to an embodiment of the present invention it is provided an arrangement for estimating a sea state, in particular wave spectrum, a floating offshore wind turbine has been subjected to, the arrangement comprising at least one sensor associated with the floating offshore wind turbine, the sensor being configured to measure a response quantity responding to the sea state; a processor adapted: to process the response quantity to derive a measured response spectrum; to deriving a calculated response spectrum based on a previously estimated wave spectrum; to derive an error between the measured response spectrum and the calculated response spectrum; to adjust the previously estimated wave spectrum based on the error, in order to derive an adjusted estimated wave spectrum.

The arrangement may be implemented in software and/or hardware. The processor may for example be configured to execute a computer program which has been read from an electronic storage. The program may comprise software instructions which may be configured to carry out or control a method of estimating a sea state according to an embodiment of the present invention.

The arrangement may for example communicatively be coupled to a wind park controller which may then receive live or stored or logged information regarding the sea state, in particular the wave spectrum. Furthermore, the wind park controller may receive information regarding the derived fatigue damage of one or more components of the wind turbine.

According to an embodiment of the present invention it is provided an offshore wind turbine system, comprising: a vessel; a wind turbine tower erected on the vessel; a nacelle mounted on top of the tower; and an arrangement according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a floating offshore wind turbine system according to an embodiment of the present invention including an arrangement for estimating a sea state according to an embodiment of the present invention;

Fig. 2 schematically illustrates a method scheme of a method of estimating a sea state according to an embodiment of the present invention;

Fig. 3 illustrates spectra as considered in embodiments of the present invention;

Fig. 4 schematically illustrates a method of estimating a sea state according to an embodiment of the present invention; and

Fig. 5 illustrates a wave spectrum as derived according to embodiments of the present invention.

Detailed Description

A localized SSE as provided by embodiments of the present invention may increase the accuracy of fatigue load estimations and would enable developers to continuously keep track of the wave conditions, which the FWT has been exposed to. Since the projection of local wave loads during the lifetime of a FWT is very difficult to accurately project a way of improving the projecting of the local sea state conditions is thereby sought by considering the FWT as a big wave rider buoy.

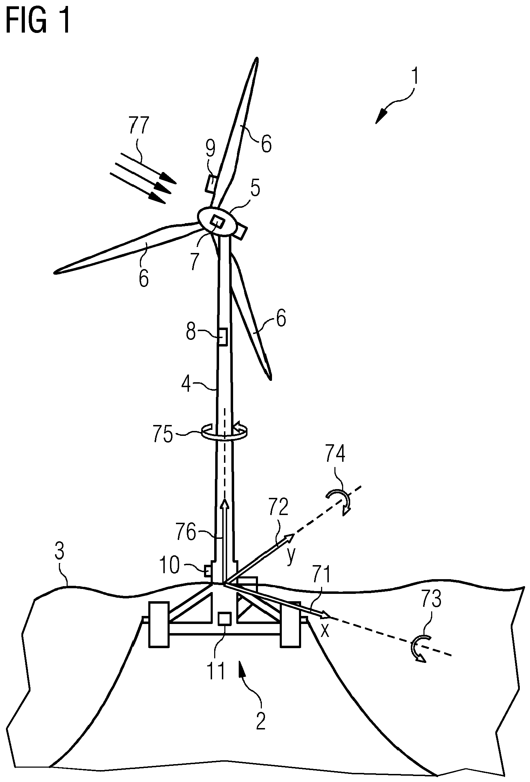

The floating offshore wind turbine system 1 (subjected to wind 77) schematically illustrated in **Fig. 1** comprises a vessel 2 which is floating on the sea 3. Furthermore, the system 1 comprises a wind turbine tower 4 which is erected on the vessel 2. On top of the tower 4, a nacelle 5 is mounted which contains a generator and a rotating shaft at which plural blades 6 are mounted through a hub. The system 1 comprises an arrangement 7 for estimating a sea state according to an embodiment of the present invention.

The arrangement 7 comprises at least one sensor 8, 9, 10, 11 which is associated with the offshore wind turbine system 1. For example, one or more of the sensors 8, 9, 10, 11 may comprise for example an acceleration sensor, a strain sensor, a position sensor and so forth. In particular, the sensor 8 is mounted at the wind turbine tower/nacelle bedframe 4, the sensor 9 is mounted at a blade root section, the sensor 10 is mounted at a base of the tower 4 and the sensor 11 is mounted at or within the vessel 2.

In other embodiments of the present invention, more or less sensors are provided and may be located at even different positions/components.

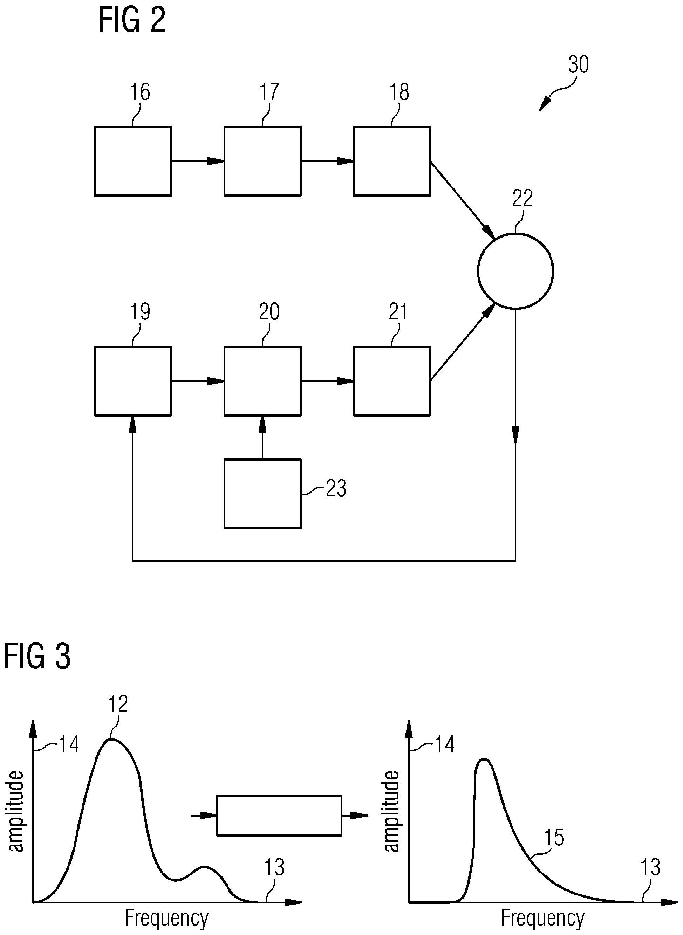

The processor of the arrangement 7 receives measurement data from one or more of the sensors 8, 9, 10, 11 representing one or more response quantities responding to the sea state. The processor processes the response quantity, in order to derive a measured response spectrum, such as spectrum 12 illustrated in **Fig. 3.** Therein, the abscissas 13 indicates the frequency while the ordinates 14 indicate amplitude or intensity. Thus, the response spectrum 12 as is derived by the arrangement 7 comprises for each frequency of a range of frequency a corresponding amplitude or intensity value.

The processor is further configured to calculate a calculated response spectrum based on a previously estimated wave spectrum. The wave spectrum may for example be the wave spectrum 15 illustrated in Fig. 3. The processor is further configured to derive an error between the measured response spectrum and the calculated response spectrum and configured to adjust the previously estimated wave spectrum based on the error, in order to derive an adjusted estimated wave spectrum.

FWTs are known to be subjected to additional motions due to the additional DOFs compared to conventional bottom fixed turbines, these additional motions can be used to estimate the corresponding wave spectra which has been creating these motions.

Embodiments of the present invention take these DOF into account, in particular six individual dimensions of freedom (DOF) namely three translations; surge (along axis 71), sway (along axis 72) and heave (along z axis 76), and three rotations; floater roll 73 (about axis 71), floater pitch 74 (about axis 72), and floater yaw 75 (about yaw or z axis 76).

Sensors to be used to measure the additional motion can be the already at hand turbine monitoring system such as acceleration signals, blade root sensors etc. Additional new cheap sensors can be made available such as, but not limited to, inclination sensors, gyroscopes strain gauges along tower etc. By using mathematical models, including information such as the transfer function of the FWT, also referred to as a Response Amplitude Operator (RAO) combined with measured responses of the FWT the sea state can be estimate through proper SSE procedures. The RAO implicitly describes how the surface elevation of the sea state are transferred into vessel motion.

In the frequency domain approach of SSE as employed by embodiments of the present invention, everything from the theoretical model of the FOWT to the response of the FWT to the final directional wave spectrum may be kept in the frequency domain.

An embodiment of a method 30 of estimating a sea state the arrangement 7 is configured to carry out or control, is schematically illustrated in **Fig. 2.** In a method step 16, one or more response quantities are measured. In a method step 17, the one or more response quantities are processed, in order to derive a measured response spectrum as is represented by method box 18. From a previously estimated wave spectrum 19, the method involves to derive a calculated response 20. By processing the response 20, a calculated response spectrum or response spectra are calculated labelled with reference sign 21.

In an error assessment element 22, an error between the measured response spectrum 18 and the calculated response spectrum or spectra 21 is derived. The method further comprises to adjust the previously estimated wave spectrum based on the error as calculated in method step 22. Thus, in a next iteration, the method box 19 comprises the adjusted estimated wave spectrum which may then be refined by further iterations to derive a further adjusted estimated wave spectrum, until for example a convergence criterium is met. The calculated response 20 is calculated based on a complex transfer function 23, as will be described below in detail.

In Fig. 2 the measured responses are converted to response spectra. In parallel a numerical calculated response spectra, which is based on response calculations having the wave spectrum and some complex transfer functions as input, is compared to the measured ones. The error between the actual measured and the numerical calculated is used to adjust the wave spectrum, which in turn then corrects the numerical calculated response spectra until a given convergence criteria is satisfied, that is when the error between the measured and numerical calculated response spectra is below a given threshold. The final wave spectrum satisfying the convergence criteria is estimated wave spectrum which it is believed the FWT has been exposed to.

One of the limitations for the SSE in the frequency domain is the necessity of assuming linearity between the response and the wave spectrum. As the method is built on the use of the superposition principle, no transient behavior nor non-linear effects can be accounted for using this method. The linear assumption therefore limits the accuracy of the estimation in extreme sea states as these waves tends to behave non-linear. As extreme sea states however are extremely rare the expected fatigue damage from such events may be neglectable.

To consider the SSE in the frequency domain additional assumptions may be needed, namely that the sea state and the associated responses represent an ergodic, homogenous random process, such that stationary, in a stochastic sense applies within a certain period of response records at each estimation sequence. This may typically be true for waves within a 3-6 hours horizon.

The frequency domain approach can be split into two different types, where one is the non-parametric method, which attempts to estimate the local wave spectra, without any prespecified shape or structure of the wave spectrum, i.e. the solution is a set of energy states discretized within frequency and direction.

The second approach is the parametric methods, which opposite to the non-parametric methods, has a predetermined shape and structure of the final wave spectrum and as such tries to estimate the relevant parameters to construct the wave spectrum, i.e. the solution is a set of optimized wave parameters, which can be used to reconstruct a theoretical wave spectrum.

Each approach has advantages and disadvantages. In general, the advantage of using the non-parametric method, is that it in theory can estimate any shape of the wave spectrum without having any pre-assumptions to the parameters defining the shape. This both with respect to the peak shape and number of peaks (bimodal spectra), whereas the parametric estimation method requires the empirical shape of the wave spectrum to be known beforehand, e.g. specifying that the spectrum is based on the empirical formulation of a JONSWAP spectrum such that it is the underlying wave parameters which are sought for. The non-parametric method however has a greater sensitivity to uncertainties in the theoretical model of the floating offshore wind turbine (FOWT) compared to the parametric method.

Both the non-parametric and the parametric approach is supported by embodiments of the present invention.

In an embodiment of the present invention, from the response spectrum 12 illustrated in Fig. 3, a wave spectrum 15 may also be calculated according to embodiments of the present invention. The calculations may be performed in the frequency domain.

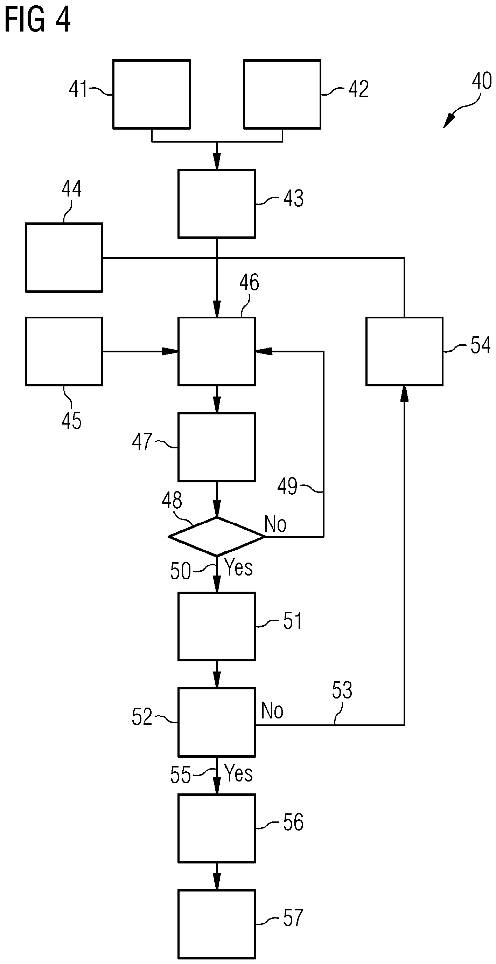

**Fig. 4** illustrates a method scheme 40 for estimating a sea state according to embodiments of the present invention, in particular when a non-parametric approach is taken. In method step 41, a response amplitude operator (RAO) is obtained e.g. from simulations or the theoretical considerations. Using the response data 42 and the RAO, the quantities A and b (see below) are constructed or calculated in a calculation block 43. In a method block 44, an initial guess on the wave spectrum vector is provided. In method block 54 pre-described hyperparameters are provided.

In a method block 45, the quantities D and c (prior distribution, see below) are constructed from prior knowledge. In a calculation block 46, the quantity B = [G d] is constructed from the initial guess of the wave spectrum vector 44 and one of the hyperparameters from block 54. In a method block 47, receiving the output of method block 46, it is solved for the wave spectrum vector.

In an assessment block 48 it is assessed, whether convergence is reached, for example whether the error is below one or more thresholds. If convergence is not reached, it is branched to a branch 49 leading back to method block 46 wherein the quantity B is again constructed. If convergence is reached it is branched to branch 50 leading to block 51. In block 51, the hyperparameter is updated. In an assessment block 52 it is checked whether i = P, where P is the amount (or value) of pre-described hyperparameters. If this is not the case, it is branched to branch 53 leading to a method block 54, in which a new hyperparameter is selected until the algorithm has run through all pre-described hyperparameters. The hyperparameter(s) may control both the smoothness and agreement to data (both cannot have optimal solution). According to an embodiment, it is searched through all pre-described hyperparameters and then at the end it is checked which hyperparameter index (or value) gives the best match.

If the assessment in block 52 results in a true result, it is branched to branch 55 leading to method block 56. In method block 56 it is checked which index yields the minimum value of S(x), see equation further below. Using the result of method block 56, the method block 57 calculates the final directional wave spectrum, being representative of the sea state.

In the following details of the Non-Parametric approach are described. However, the invention is not restricted to these details.

The non-parametric problem also sometimes referred to as the Bayesian estimation method can be solved by utilizing Bayesian statistic which introduces the use of prior information of the wave spectra. e.g. that it has no energy content above a certain frequency as this would be unphysical. In general, any response signal caused by the wave forces, for which a complex-valued transfer function exist, can be used in the wave spectrum estimation. This implies that standard turbine sensors like acceleration sensors, blade load sensors etc., can be used in the estimation algorithm. Other sensors, but not limited to, which could be utilized could be inclination sensors, gyroscopes and/or GPS tracking.

Under the assumption of linearity, a relationship between the wave spectrum and the response signals through the complex-valued transfer function exist. This relationship is in the field of wave estimation generally known as the wave buoy analogy and is described as

$$\Psi_{ij}(\omega) = \int_{-\pi}^{\pi} \Phi(\omega,\beta)\overline{\Phi(\omega,\beta)}\,S(\omega,\beta)d\beta$$

Here $\Psi_{ij}(\omega)$ is the cross-spectra of the ith and jth response, $\Phi(\omega,\beta)$ denotes the complex valued transfer function, which in hydrodynamic is often referred to as the Response Amplitude Operator (RAO) and is a function of angular frequency $\omega$ and direction $\beta$.. Note that the integral is done with respect to the wave direction $\beta$.

The operator [ ‾ ] denotes the complex conjugate. Mathematically this is understood that the response of the FWT is a result of the convolution between the RAO (frequency domain model).

A simplistic model of the response amplitude operator of the FWT is described directly in the frequency domain as:

$$\Phi(\omega,\beta) = \left(-\omega^2\left(M_{RB} + A(\omega)\right) + j\omega B_{total}(\omega) + K_{total}\right)^{-1} F_{wave}(\omega,\beta)$$

Where $M_{RB}$ is a the rigid body mass matrix, $A(\omega)$ is a frequency dependent added mass matrix, $B_{total}(\omega)$ is a frequency dependent damping matrix which includes both potential and viscous damping and potentially other damping terms as aerodynamic damping etc., $K_{total}$ is a stiffness matrix including both mooring line stiffness and hydrostatic stiffness while $F_{wave}(\omega,\beta)$ is a frequency and direction dependent hydrodynamic forcing vector. The RAO can be extended to also include tower bending mode shapes and aerodynamic damping.

This complex valued transfer function serves as the connection between the directional wave spectrum $S(\omega,\beta)$ and the principle states that given.

In the field of wave estimation, the reverse procedure is sought, as visualized in the figure below, such that the directional wave spectrum is estimated based on the measured directional response spectrum and the theoretical calculated frequency domain model and as such a deconvolution procedure is needed. This deconvolution procedure is facilitated by the Bayesian modelling technique.

As numerical computations are inevitable, the wave buoy analogy is rewritten using matrix notation, where the integral of the continues wave buoy analogy can be written in the special discrete form given in

$$\Psi_{ij} = \Delta\beta \sum_{k=1}^{K} \Phi_{i,k}(\omega)\overline{\Phi_{i,k}(\omega)}\,S_k(\omega)$$

Where $\Delta\beta = \dfrac{2\pi}{k}$ and K is the total amount of considered wave propagation angles. To speed up calculations the numerical formulation of the wave buoy analogy with the summation can be written by matrix as

$$\Psi(\omega) = \Delta\beta\Phi(\omega)S(\omega)\overline{\Phi(\omega)}$$

If assuming e.g. three different response signals is available, $\delta$, $\lambda$, and $\rho$, the auto- and cross spectral matrix of the three responses $\Psi\omega$, along with the multi directional system matrix $\Phi(\omega)$, and wave spectrum $\mathbf{S}(\omega)$, the above matrices are written as

$$\Psi(\omega) = \begin{bmatrix} \Psi_{\delta\delta} & \Psi_{\delta\lambda} & \Psi_{\delta\rho} \\ \Psi_{\lambda\delta} & \Psi_{\lambda\lambda} & \Psi_{\lambda\rho} \\ \Psi_{\rho\delta} & \Psi_{\rho\lambda} & \Psi_{\rho\rho} \end{bmatrix}$$

$$\Phi(\omega) = \begin{bmatrix} \Phi_{\delta,1} & \cdots & \Phi_{\delta,K} \\ \Phi_{\lambda,1} & \cdots & \Phi_{\lambda,K} \\ \Phi_{\rho,1} & \cdots & \Phi_{\rho,K} \end{bmatrix}$$

$$S(\omega) = \begin{bmatrix} S_1 & \cdots & 0 \\ \vdots & \ddots & \vdots \\ 0 & \cdots & S_K \end{bmatrix}$$

Utilizing that the auto and cross spectral matrix $\Psi(\omega)$ is Hermitian, that is $\Psi(\omega) = \Psi(\omega)^\mathsf{T}$, the matrix can be decomposed into complex matrix notation

$$\Psi_{ij} = C_{ij} + iQ_{ij}$$

Where $C_{ij}$ contains the real parts also referred to as the cospectrum while $Q_{ij}$ contains the imaginary part called the quadrature spectrum.

Using this decomposition and only using the upper triangular indices of the matrices, a multivariate expression can be formulated as

$$b = Af(x) + w$$

Here $b$ is the cross-spectrum vector containing the separate real and imaginary part of the cross-spectrum matrix. $A$ is the system matrix containing the products of the system matrices and $f(x)$ is the unknown discretized values of the directional wave spectra, where a non-negativity constrain is being added in the form of an exponential function of $x$. Lastly $w$ is introduced as the Gaussian distributed white-noise sequence vector, as the response generation is seen as a stochastic process with noisy data. In reality $w$ represents the measurement noise of the response signal.

To support the estimation algorithm another relationship related to the energy content can be establish, which is the spectral moment (variance) of the response

$$\int \Psi_{ij}(\omega)d\omega = \iint_{-\pi}^{\pi} \Phi(\omega,\beta)\overline{\Phi(\omega,\beta)}S(\omega,\beta)d\beta d\omega$$

Which in discrete forms is written as

$$\Delta\omega \sum_{m=1}^{M} \Psi_{ij}(\omega_m) = \Delta\omega\Delta\beta \sum_{m=1}^{M} \sum_{k=1}^{K} \left( \left| \Phi_{i,k}(\omega_m) \right|^2 S_k(\omega_m) \right)$$

Where yet again K is the number of directions, while M is the number of frequencies.
This equation is specifying that the amount of energy contained in each of the response spectra, should equal the amount of energy found from the system equations and the wave spectrum. This relationship will slightly increase the number of equations without leading to more additional unknowns.

In the determination of the directional wave spectrum it is recognized that the system may consist of a large amount of linear equations that may be highly underdetermined i.e. the spectrum, is to be determined based on a very limited amount of equations/information and in general contains more unknowns than equations.

Furthermore, the problem is in principle very ill-conditioned. The ill-conditioned problem arises from the fact that a small difference in the wave spectrum vector **x,** will produce a large difference in the resultant response spectra, due to the exponential constraint of the system.

A solving procedure, capable of handling a highly underdetermined system of equations is therefore necessary in order to facilitate the determination of the directional wave spectrum.

Using the Bayesian modelling, as a tool to approach the problem of statistical inference, where, by the use of data analysis, and prior information, Bayes theorem would be able to statistically determine the directional wave spectrum based on some likelihood function.

In Bayesian statistics, the core idea is that the posterior information for some process, can be determined based on some prior information and the likelihood of the data given some parameter θ. This is described as

$$p(\boldsymbol{\theta}|\boldsymbol{y}) = \frac{p(\boldsymbol{y}|\boldsymbol{\theta})p(\boldsymbol{\theta})}{p(\boldsymbol{y})}$$

Where **p(y|θ)** is the conditional distribution of some parameters θ given some data **y**. p(θ) is the probability distribution of the parameters θ and p(**y**), is the probability distribution of the data **y**. The equation describes how the posterior distribution of the parameter θ given the data **y**, is directly proportional to the product of the data distribution p(**y**|θ) and some prior distribution p(θ) or information of the parameter θ. This shall be understood as the posterior distribution is highly affected by the priori information supplied to any recorded data distribution.

The data distribution p(**y**|θ), can instead of being a function of the data itself, be a function of the parameter θ. This is to be understood as some parameter θ, is likely to be true, given some data **y**. As such the data distribution, p(**y**|θ) can thereby instead be called the likelihood function of the parameters θ given the data **y** written as L(θ|**y**), which means that Bayes' theorem can be rewritten as

$$p(\boldsymbol{\theta}, \boldsymbol{y}) \propto L(\boldsymbol{\theta}|\boldsymbol{y})p(\boldsymbol{\theta})$$

From the assumption about **w** being introduced as a Gaussian distributed white-noise sequence vector with zero mean and variance of $\sigma^2$, the data distribution (or the likelihood function) of the cross spectra data can be given as a multivariate Gaussian distribution and rewritten as

$$L(\boldsymbol{x}|\sigma^2) = \left(\frac{1}{2\pi\sigma^2}\right)^{\frac{N^2M+N}{2}} \exp\left(-\left(\frac{1}{2\pi\sigma^2}\right)\left|\left|\boldsymbol{A}\boldsymbol{f}(x) - \boldsymbol{b}\right|\right|^2\right)$$

Where N is the number of response signals and M is the number of frequencies implying that **N²M + N** is the total number of integral equations formed by the product between the square of the number of measured responses, N, and the number of frequencies M considered. The addition of N equations is coming from the equivalence of energy which is included.

The prior distribution can be used to a couple of assumptions to the smoothness of the spectrum, the spectral estimations at the boundary that is when $\omega \to 0$ and $\omega \to \infty$, , furthermore information with respect to the mean wave direction, e.g. on wind direction or even wind speed, can be included as prior information. E.g. there is some correlation between wind sea states and the wind direction and wind speed.

On the above assumptions and if each of the prior distributions is distributed as Gaussian with zero mean and variance $\dfrac{\sigma^2}{u^2}$, the overall prior distribution can be written as

$$p(\boldsymbol{x}|u, \sigma^2) = \left(\frac{u^2}{2\pi\sigma^2}\right)^{\frac{KM}{2}} \exp\left(-\frac{u^2}{2\sigma^2}\left|\left|\boldsymbol{D}\boldsymbol{x} - \boldsymbol{c}\right|\right|^2\right)$$

Where u is a hyper-parameter expressing the degree of smoothness and agreement to data, **D** is composed of elements describing the prior constrains when multiplied with **x** contains information regarding prespecified values to be considered in the prior constraint's values at the boundary, while **c** contains offsets used to prevent excessive spectral estimation. It shall be noted that in Bayesian statistics, there is always a tradeoff between agreement to the data and smoothness of the data and it is not possible to achieve the best agreement in smoothness as this would imply an unstable solution (wildly oscillating unrealistic solution) or the best agreement to data as this would imply non-smooth (discrete) transitions between segments ($\Delta\omega\Delta\beta$ ()).

Then according to Bayes theorem, the posterior distribution/information of the discretized spectrum is based on the multivariate Gaussian data distribution and prior the prior information

$$P_{post}(x|\sigma^2, u) \propto L(x|\sigma^2) p(x|u, \sigma^2) \rightarrow P_{post}(x|\sigma^2, u)$$

$$\propto \left(\frac{1}{2\pi\sigma^2}\right)^{\frac{N^2 M + N}{2}} \left(\frac{u^2}{2\pi\sigma^2}\right)^{\frac{KM}{2}} \exp\left(-\left(\frac{1}{2\sigma^2}\right) S(x)\right)$$

Where

$$S(x) = \left\|Af(x) - b\right\|^2 + u^2 \left\|Dx - c\right\|^2$$

As seen in the equation to maximize the posterior distribution of **x,** that is the maximum knowledge regarding the final unknown wave spectra, one has to minimize S(**x**) due to the negative exponential function of S(**x**). Note S(**x**) shall not be mistaken as the wave spectrum $S(\omega,\beta)$. This minimization problem can be viewed as a constrained least square method, which is a general way of solving inverse problems. However due to exponential functions, **f(x)** is non-linear with respect to **x,** which therefore has to be linearized to be solved in such a minimization problem. **f(x)** can be linearized utilizing Taylor expansion around a given value **x**$_0$ such as

$$f(x) = f(x_0) + F(x_0)(x - x_0)$$

Which if inserted into S(x) yields

$$S(x) = \left\|A^* x - b^*\right\|^2 + u^2 \left\|Dx - c\right\|^2$$

Where

$$A^* = AF(x_0)$$

$$b^* = b - Af(x_0) + AF(x_0)x_0$$

Such S(**x**) can be rewritten as

$$S(x) = \|Gx - d\|^2$$

Where

$$G = \begin{bmatrix} A^* \\ uD^* \end{bmatrix}, d = \begin{bmatrix} b^* \\ uc \end{bmatrix}$$

Which is the form of S($\mathbf{x}$) which shall be minimized in order to find the maximum posterior distribution of $\mathbf{x}$, which then can be mapped into $\mathbf{f(x)}$ to yield the directional wave spectra. It shall be noted that both $\mathbf{A}^*$ and $\mathbf{b}^*$ depends on the initial value of $\mathbf{xo}$, which implies that S($\mathbf{x}$) cannot be calculated directly but must be found through iteration. To finalize the solution procedure, one needs to pre-calculate a sufficient amount of hyperparameters used to minimize S($\mathbf{x}$) and at the same time sets criteria to the smoothness of the final wave distribution. The hyperparameter which minimizes S($\mathbf{x}$) determines which parameter space is used in the final directional wave spectrum calculation.

A simplified schematically overview of the iteration scheme is as follow:

1. Pre-calculate RAO
2. Collect Response Data
3. Construct $\mathbf{A}$ (system matrix) and $\mathbf{b}$ (response vector)
4. Pre-calculate a sufficient amount (P) of hyperparameters $u_i$ yielding a given index such that i = 1,...,P
5. Construct $\mathbf{D}$ and $\mathbf{c}$ (priori information)
6. Give initial guess on wave spectrum vector $\mathbf{x}_0$
7. From the value of $\mathbf{x}_0$ and $u_i$, construct $\mathbf{B}$ using $\mathbf{G}$ and d and solve for new wave spectrum vector $\mathbf{x_1}$, which represents a better solution than $\mathbf{x}_0$

8. Determine if convergence has been achieved $\left\lVert \left\lVert \frac{x_1 - x_0}{x_1} \right\rVert \right\rVert < \epsilon\,.\,.$   If not set $\mathbf{x}_0 = \mathbf{x_1}$ and repeat step 7

9. If convergence, calculate S($\mathbf{x}$) based on the used convergence value of x and used hyperparameter $u_i$
10. If i < P, then set i = i + 1, and update the hyperparameter, such that $u_i = u_{i+1}$
11. If i = P, determine which index of the hyperparameter yields the lowest value of S($\mathbf{x}$), which represent the most smooth and best in agreement data, and use that index to determine which wave spectrum vector shall be used to calculate the final directional wave spectrum

A visualization of the schematic overview is given in the Fig. 4.

To conclude, by utilizing the FOWT as a big wave rider buoy the directional wave spectra can be estimated/calculated utilizing the system response (data-driven) and knowledge regarding the theoretical model of the FOWT (model driven) to estimate/calculate a directional wave spectra. Bayesian statistics is used for estimating/calculating the spectra. This by introducing prior knowledge regarding the wave spectra combined with statistical probability of the parameters to estimate.

Other solution schemes could be through parametric optimization or brute force residual calculation using an iterative scheme.

Below details of the Parametric approach are provided. However the invention is not restricted to these features.

As mentioned the wave energy spectrum can also be estimated utilizing a procedure which assumes the wave spectrum to be comprised of one or more parametrized, empirically theoretically known, wave spectra. Conceptionally the procedure is quite similar to the non-parametric procedure including the governing equations. This means that the relationship between the measured response spectra and the directional wave spectrum is given by

$$b = Af(x) + w$$

In this equation a white noise sequence vector $\mathbf{w}$ was introduced in order to facilitate the Bayesian modelling. Excluding the introduction of white noise, no assumptions is made to the error between the measured and calculated response spectra. This implies that the directional wave spectrum $\mathbf{f}$ can be solved for in the least square solving procedure minimizing the error between the estimated response spectrum $\mathbf{Af}$ and measured response spectrum $\mathbf{b}$

$$\min |Af - b|$$

This implies that the optimal wave spectrum estimated in the parametric method is found from optimizing a number of parameters, e.g. significant wave height, Hs, peak period, Tp, mean propagation angle, $\theta$, wave spreading parameter, s, etc.

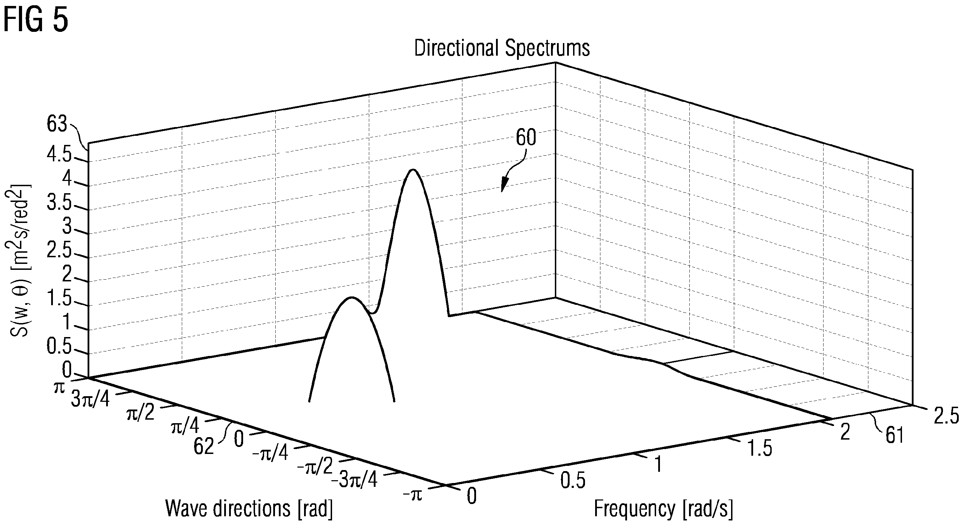

**Fig. 5** schematically illustrates an example of a directional wave spectrum 60 as a result of performing a method according to an embodiment of the present invention. The spectrum 60 represents power or intensity of wave motions portions having frequency indicated on abscissa axis 61 and having a wave propagation direction as indicated on abscissa 62. The directional wave spectrum 60 may then be utilized by the arrangement in order to calculate fatigue load wind turbine is currently being subjected to or has been subjected to. Wave spectrum 60 is a double peaked power spectrum containing both a wind and swell sea state.

The advantages of embodiments of the invention may be that the actual wave spectrum the FOWT has been exposed to can be estimated continuously, updated and logged within some given periods of time interval. Thereby the actual wave spectrum can be logged during the operational life time of the wind turbine. This information can be used to post-evaluate the accumulated fatigue damage of the FOWT. This information can e.g. be used to life time extend the operation of the turbine, be used as a decision tool to determine whether some upgrades can be installed on the turbines (power boost, power curve upgrades etc.), whether some wind farm control strategies can be used e.g. Wake Adapt. Furthermore, it can provide vital information to understand whether and how less conservative design can be possible in the future.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of estimating a sea state, in particular wave spectrum (60), an offshore wind turbine (1) has been subjected to, the method comprising:

   measuring a response quantity (16) responding to the sea state, using at least one sensor (8,9,10,11) associated with the offshore wind turbine (1);
   processing the response quantity (16) to derive a measured response spectrum (18);
   deriving a calculated response spectrum (21) based on a previously estimated wave spectrum (19);
   deriving an error (22) between the measured response spectrum (18) and the calculated response spectrum (21);
   adjusting the previously estimated wave spectrum (19) based on the error, in order to derive an adjusted estimated wave spectrum (60).

2. Method according to the preceding claim, further comprising:
   iteratively adjusting the estimated wave spectrum (60), until the error satisfies a convergence criterium, in particular is below a threshold.

3. Method according to one of the preceding claims, wherein the sensor (8,9,10,11) is mounted on or at or within the, in particular, floating offshore wind turbine and/or on or at or within a floating platform and/or on or at or within a vessel (2) carrying the wind turbine.

4. Method according to one of the preceding claims, wherein the sensor (8,9,10,11) includes at least one of:

   an acceleration sensor;
   a blade root strain/load sensor;
   an inclination sensor;
   a gyroscope;
   a strain gauge sensor, in particular mounted along the tower;
   a GPS tracking device.

5. Method according to one of the preceding claims, wherein the adjusted estimated wave spectrum (60) specifies power (63) and/or amplitude of plural wave portions depending on a frequency (61) of the wave portion and/or direction (62) of the wave portion.

6. Method according to one of the preceding claims, wherein deriving the calculated response spectrum (21) based on the previously estimated wave spectrum (19) involves:
   applying a linear transfer function (23) and/or a response amplitude operator (RAO) to the previously estimated wave spectrum (19).

7. Method according to one of the preceding claims, wherein the transfer function (23) and/or Response Amplitude Operator (RAO) implicitly describes how the surface elevation of the sea state **characterized by** the respective wave spectrum is transferred into vessel motion and/or wind turbine motion, wherein it is in particular assumed that the sea state and the associated responses represent an ergodic, homogenous random process.

8. Method according to one of the preceding claims, wherein the method applies a frequency domain approach, wherein the measured and the estimated wave spectrum and/or the response quantity and/or the error is given or derived in the frequency domain.

9. Method according to one of the preceding claims, wherein the estimated wave spectrum (60) is modelled according to a non-parametric approach, wherein the adjusted estimated wave spectrum is represented as set of energy states discretized having different frequencies and directions.

10. Method according to the preceding claim, wherein the non-parametric approach applies Bayesian statistic which introduces the combination of prior information of the wave spectrum and some likelihood that some parameters given a data distribution is true and is applied to model a posterior distribution.

11. Method according to one of the preceding claims, wherein the estimated wave spectrum (60) is modelled according to a parametric approach, wherein the estimated wave spectrum is represented by definition of one or more wave parameters of one or more predetermined wave spectra, wherein the adjusted estimated wave spectrum is represented by optimized wave parameters.

12. Method according to the preceding claim, wherein the wave parameters include at least one of:

> wave height (Hs),
> peak period (Tp),
> mean propagation angle ($\theta$),
> wave spreading parameter (s).

13. Method according to one of the preceding claims, wherein the method applies the following equation:

$$\boldsymbol{b} \;=\; \boldsymbol{Af}(\boldsymbol{x}) \;+\; \boldsymbol{w}$$

wherein
Af is the estimated response spectrum,
b is the measured response spectrum,
A is the system matrix transfer function,
f is the estimated wave spectrum,
x represents wave parameter values,
w is measurement noise;
the method in particular further comprising at least one of:

> continuously monitoring/logging the sea state;
> estimating fatigue damage of at least one component of the wind turbine;
> providing an alert regarding maintenance and/or redesign and/or upgrade and/or replacement and/or repair of at least one component of the wind turbine and/or regarding shut down and/or curtailment.

14. Arrangement (7) for estimating a sea state, in particular wave spectrum, an offshore wind turbine (1) has been subjected to, the arrangement comprising:

> at least one sensor (8,9,10,11) associated with the offshore wind turbine (1), the sensor being configured to measure a response quantity responding to the sea state;
> a processor adapted:

>> to process the response quantity (16) to derive a measured response spectrum (18);
>> to deriving a calculated response spectrum (21) based on a previously estimated wave spectrum (19);
>> to derive an error (22) between the measured response spectrum (18) and the calculated response spectrum (21);
>> to adjust the previously estimated wave spectrum (19) based on the error, in order to derive an adjusted estimated wave spectrum.

**15.** Offshore wind turbine system (1), comprising:

a vessel (2);
a wind turbine tower (4) erected on the vessel (2);
a nacelle (5) mounted on top of the tower; and
an arrangement (7) according to the preceding claim.

EP 4 098 542 A1

FIG 1

17

## FIG 2

## FIG 3

# FIG 4

FIG 5

Europäisches
Patentamt

European
Patent Office

Office européen
des brevets

# EUROPEAN SEARCH REPORT

Application Number

EP 21 17 7378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/204636 A1 (SCHOLTE-WASSINK HARTMUT [DE] ET AL) 25 August 2011 (2011-08-25) * paragraph [0037] - paragraph [0043] * * figures 1,2,3 * ----- | 1-11, 13-15 | INV. B63B39/00 B63B79/15 B63B79/20 |
| X | US 2021/123414 A1 (FRANK JARED [US] ET AL) 29 April 2021 (2021-04-29) * paragraph [0037] - paragraph [0039] * * figures 1,2,3,4,5,6 * ----- | 1,3-12, 14,15 | |
| X | WO 2021/078993 A1 (ODFJELL DRILLING AS [NO]) 29 April 2021 (2021-04-29) * page 2, line 24 - page 4, line 31 * * figures 1,2,3,4 * ----- | 1-3,5-15 | |

TECHNICAL FIELDS
SEARCHED (IPC)

B63B
B63J

The present search report has been drawn up for all claims

| Place of search | Date of completion of the search | Examiner |
|---|---|---|
| The Hague | 23 November 2021 | Schmidt, Rémi |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 17 7378

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2021

| Patent document cited in search report | | Publication date | Patent family member(s) | | | Publication date |
|---|---|---|---|---|---|---|
| US 2011204636 | A1 | 25-08-2011 | CN | 102562491 | A | 11-07-2012 |
| | | | DK | 2469083 | T3 | 06-02-2017 |
| | | | EP | 2469083 | A2 | 27-06-2012 |
| | | | US | 2011204636 | A1 | 25-08-2011 |
| US 2021123414 | A1 | 29-04-2021 | US | 2021123414 | A1 | 29-04-2021 |
| | | | WO | 2021078873 | A1 | 29-04-2021 |
| WO 2021078993 | A1 | 29-04-2021 | NO | 20191269 | A1 | 26-04-2021 |
| | | | WO | 2021078993 | A1 | 29-04-2021 |

EPO FORM P0459

For more details about this annex : see Official Journal of the European Patent Office, No. 12/82